# EUROPEAN PATENT SPECIFICATION

(11) **EP 0 283 148 B1**
(45) Date of publication and mention of the grant of the patent: **30.07.1997**
(21) Application number: 88301638.8
(22) Date of filing: 25.02.1988
(51) Int. Cl.: C08G 65/10

(54) **Preparation of filterable double metal cyanide complex catalyst for alkylene oxide polymerisation**
Herstellung eines filtrierbaren, für die Alkylenoxidpolymerisation verwendbaren Doppelmetallcyanidkomplex-Katalysators
Préparation d'un catalyseur filtrable à base d'un complexe cyanure à doubles métaux utilisable pour la préparation de l'oxyde d'alcoylène

(30) Priority: 26.02.1987 US 19386
(43) Date of publication of application: 21.09.1988
(73) Proprietor: ARCO Chemical Technology, L.P., Greenville, Delaware 19807 (US)
(72) Inventor: Harper, Stephen D., West Chester Pennsylvania 19382 (US)
(74) Representative: Cropp, John Anthony David

(56) References cited:
- US-A- 2 187 006
- US-A- 3 829 505
- US-A- 4 348 370
- US-A- 4 394 298
- US-A- 4 721 818
- Römpps Chemie-Lexikon, 7th edition, 1977, p. 3638; 8th edition, 1981, p. 1287

## Description

This invention relates to a process for the preparation of catalysts of the double metal cyanide complex class.

The preparation of double metal cyanide complex catalysts, e.g. a metal hexacyanometallate catalyst which is useful for alkylene oxide polymerization, from a metal salt and an alkali metal hexacyanometallate requires the removal of the alkali metal halide formed during the reaction. Due to the small particle size of the metal hexacyanometallate, filtration is not practical. Centrifugation, dialysis, or conversion to a filterable metal hydroxide salt are the methods which have been described previously in the literature. Various methods have been outlined in US-A-3,427,256; 3,941,849; 4,472,560; and 4,477,589. These prior art methods require sophisticated equipment to achieve separation. The present invention provides a method which facilitates the use of filtration to prepare double metal cyanide complex catalysts.

US-A-3,829,505 confirms that mere filtration of the precipitate obtained from reaction of the metal salt with the alkali metal cyanometallate results in an inactive catalyst and teaches treating the catalyst with water or, better still, an organic complexing agent to activate it.

According to the invention, there is provided a process for preparing a double metal cyanide complex catalyst for alkylene oxide polymerisation comprising
(a) reacting in a liquid medium which includes one or both of (i) an ether generally known to be useful in the reaction of the metal salt and the alkali metal cyanometallate and (ii) a ketone at least one metal salt selected from the salts of Zn(II), Fe(II), Fe(III), Co(II), Ni(II), Mo(IV), Mo(VI), Al(III), V(IV), V(V), Sr(II), W(IV), W(VI), Mn(II), and Cr(III), with at least one alkali metal cyanometallate selected from the metallates of Fe(II), Fe(III), Co(II), Co(III), Cr(III), Mn(II), Mn(III), V(IV), and V(V), in the presence of from 0.01 to 100 times the total weight of metal salt plus alkali metal cyanometallate of filter-aid particles to form a slurry of double metal cyanide complex catalyst and filter-aid particles dispersed in the liquid medium which has dissolved therein alkali metal salt formed during the reaction;
(b) recovering the double metal cyanide complex catalyst and filter-aid particles from the liquid medium by filtration, and
(c) washing the catalyst and particles.

According to a second aspect of the present invention there is provided a process for preparing a double metal cyanide complex catalyst for alkylene oxide polymerisation which comprises :
(a) reacting in a liquid medium which includes one or both of (i) an ether generally known to be useful in the reaction of the metal salt and the alkali metal cyanometallate and (ii) a ketone at least one metal salt selected from the salts of Zn(II), Fe(II), Fe(III), Co(II), Ni(II), Mo(IV), Mo(VI), Al(III), V(IV), V(V), Sr(II), W(TV), W(VI), Mn(II), and Cr(III), with at least one alkali metal cyanometallate selected from the metallates of Fe(II), Fe(III), Co(II), CO(III), Cr(III), Mn(II), Mn(III), V(IV), and V(V),
(b) adding from 0.01 to 100 times the total weight of the metal salt plus the alkali metal cyanometallate of filter-aid particles to the liquid medium to form a slurry of double metal cyanide complex catalyst and filter-aid particles dispersed in the liquid medium which has dissolved therein alkali metal salt formed during the reaction;
(c) recovering the double metal cyanide complex catalyst and filter-aid particles from the liquid medium by filtration, and
(d) washing the catalyst and particles.

The invention also provides a process for preparing a double metal cyanide complex catalyst for alkylene oxide polymerization which comprises:
(a) adding an aqueous solution of an alkali metal cyanometallate selected from the group consisting of the metallates of Fe(II), Fe(III), Co(II), Co(III), Cr(III), Mn(II), Mn(III), V(IV), and V(V) to an aqueous slurry of a metal salt selected from the group consisting of the salts of Zn(II), Fe(II), Fe(III), Co(II), Ni(II), Mo(IV), Mo(VI), Al(III), V(IV), V(V), Sr(II), W(IV), W(VI), Mn(II), and Cr(III) and filter-aid particles;
(b) treating the resulting mixture with glyme;
(c) recovering the double metal cyanide complex catalyst and filter-aid particles from the liquid medium by filtration, and
(d) washing the catalyst and particles with aqueous glyme.

In a modification of the process described in the immediately preceding paragraph, the filter-aid particles may be added after step (a) but before step (c).

As used herein, the term "filter-aid" means any inert, insoluble substance which is sufficiently porous to allow passage of water and other liquids of similar viscosity while retaining foreign particles on the surface of the filter-aid. In the practice of this invention, it is preferred that the filter-aid have a relatively narrow particle size distribution of approximately 100-200 mesh to permit rapid filtration and washing of the catalyst slurry while retaining the double metal cyanide catalyst in the filter cake. It is also preferred that the filter-aid have a low density so that it forms a relatively uniform filter cake when mixed with the catalyst, which tends to settle fairly slowly out of the liquid medium. Any suitable filter-aid may be employed. Suitable filter-aids include alumina, silica gel, silica, aluminum silicate, magnesium silicate, diatomaceous earth, perlite, carbon black, charcoal, and the like, and their mixtures. Commercial materials found useful include Aldrich activated neutral alumina, United Catalysts SAHY-99 alumina, Exolon WP 150 mesh α-alumina, Davison Grade 952 silica gel, and Celite diatomaceous earth (trade marks).

In a preferred embodiment of this invention, the metal salt reacted with the alkali metal cyanometallate is a metal halide, metal sulfate, or metal nitrate. Metal halides are preferred, particularly metal chlorides.

In another preferred embodiment, the alkali metal of the alkali metal cyanometallate is lithium, sodium, or potassium.

In yet another embodiment of the invention, the filter-aid may be added to the reaction mixture after the catalyst has been prepared but before the separation of the catalyst from the liquid medium.

In one procedure according to the invention, catalysts have been prepared by addition of a dilute aqueous solution of alkali metal cyanometallate to an aqueous slurry of filter-aid and metal salt. The resulting mixture is then treated with glyme and collected by filtration in a fritted glass filter funnel. The filter cake is washed with aqueous glyme to remove the alkali metal salt formed as a byproduct. The filter cake is then dried under vacuum and crushed to yield the final catalyst containing the filter-aid and alkali metal cyanometallate.

If isolation of the catalyst is attempted in the absence of inert filter-aid, the time required to filter and wash the catalyst is much longer since filter beds which are able to retain very small particles generally exhibit slower flow rates. In addition, the filter cakes formed by double metal cyanide catalysts tend to have low porosity due to fine particle size.

Any suitable liquid medium for the reaction of the metal salt and alkali metal cyanometallate can be employed. Suitable liquid media are water and any of the ethers generally known to be useful in these reactions, such as tetrahydrofuran, dimethoxyethane(glyme), and ketones, such as acetone, and their mixtures.

The amounts of metal salt and alkali metal cyanometallate used are determined by the desired composition of the final active catalyst. Typically, a 50% molar excess of metal salt is used. The amount of filter-aid required varies depending on its density, surface area, and particle size, but will be in the range 0.01 to 100 times the total weight of the metal salt plus the alkali metal cyanometallate.

Catalysts prepared according to this invention may be used for the preparation of propylene oxide polyols in exactly the same manner as catalysts prepared by previously known methods. The amount of catalyst employed must be adjusted to compensate for the inert filter-aid present.

The present invention is further illustrated by the following examples, wherein parts and percentages are by weight, unless otherwise indicated.

### EXAMPLE 1

### (a) Catalyst Preparation

A solution of 4.15 g (12.5 mmole) potassium hexacyanocobaltate in 100 ml water was added slowly with mixing to a mixture of 3.82 g (28.0 mmole) zinc chloride and 25.0 g 75 - 150 µm (100-200 mesh) alumina (United Catalysts SAHT-99) in 40 ml water. After addition was completed, 25 ml glyme were added, and the mixture stirred for one hour. The catalyst was collected by filtration in a 6.5 cm diameter fritted filter funnel, washed 3 times with 70 ml 30% glyme and twice with 70 ml 90% glyme. Filtration required about 50 minutes and the filtrate was only slightly cloudy. The filter cake was air-dried, crushed, and dried 18 hours at 13 Pa (0.1 mm) pressure (25° C.) to yield 29.85 g powder containing 1.3% Co, 3.1% Zn, and 0.012% K.

### (b) Polymerization

A one-liter stirred autoclave was charged with 2.23 g catalyst from (a) above, 21.5 g propoxylated trimethylolpropane (470 MW), 110 ml of tetrahydrofuran, and 32 g propylene oxide (PO). A pressure drop was observed shortly after heating the mixture to 90° C. Another 523 g of PO was added over 6 hours. The analytical data obtained for the final product after removal of solvent are shown in Table I.

### COMPARATIVE EXAMPLE 2

### (a) Catalyst Preparation

A solution of 134.46 g (405 mmole) potassium hexacyanocobaltate in 3240 ml water was added slowly with mixing to 123.77 g (908 mmole) zinc chloride in 975 ml water. After addition was completed (2.5 hours), 820 ml glyme were added, and the mixture stirred for 3 more hours. The precipitate was collected by centrifugation in 4 one-liter bottles, washed 3 times with 2260 ml (total) 30% glyme, and twice with 2260 ml 90% glyme. The catalyst was re-suspended in each wash before centrifugation. After drying 4 days in a vacuum oven under a nitrogen purge (25° C.), the catalyst was crushed to a fine powder and dried 5 hours at 13 Pa (0.1 mm) pressure to yield 185.15 g product containing 24.5% C, 2.7% H, 16.2% N, 23% Zn, 11% Co, and 0.12% K.

### (b) Polymerization

A one-liter autoclave was charged with 0.30 g catalyst from Comparative Example II(a), 21.5 propoxylated trimethylolpropane (470 MW), and 145 ml tetrahydrofuran. A pressure drop was observed 15 minutes after adding 39 g PO at 90° C. Another 503 g PO was added over 9 hours.

**TABLE I**

| | Example 1 | Example 2 |
|---|---|---|
| Mₙ, Calc. | 12,500 | 12,300 |
| Mₙ, GPC | 11,000 | 11,500 |
| Polydispersity | 1.76 | 1.71 |
| HO No. | 15 | 16 |
| Mₙ, HO No. | 11,200 | 10,300 |
| Unsatn., Meq/g | 0.008 | 0.008 |
| Viscosity, 25° C., cps (mPa·s) | 5300 | 5890 |

From property comparison in Table I, it is shown that comparable catalyst was prepared in both Examples. However, the method of Example 1 required only filtration of the zinc hexacyanocobaltate with the aid of an inert filter-aid, whereas the method of Example 2 required elaborate centrifugation processes and equipment.

## Claims

1. A process for preparing a double metal cyanide complex catalyst for alkylene oxide polymerisation which comprises :
(a) reacting in a liquid medium which includes one or both of (i) an ether generally known to be useful in the reaction of the metal salt and the alkali metal cyanometallate and (ii) a ketone at least one metal salt selected from the salts of Zn(II), Fe(II), Fe(III), Co(II), Ni(II), Mo(IV), Mo(VI), Al(III), V(IV), V(V), Sr(II), W(IV), W(VI), Mn(II), and Cr(III), with at least one alkali metal cyanometallate selected from the metallates of Fe(II), Fe(III), Co(II), Co(III), Cr(III), Mn(II), Mn(III), V(IV), and V(V), in the presence of from 0.01 to 100 times the total weight of metal salt plus alkali metal cyanometallate of filter-aid particles to form a slurry of double metal cyanide complex catalyst and filter-aid particles dispersed in the liquid medium which has dissolved therein alkali metal salt formed during the reaction;
(b) recovering the double metal cyanide complex catalyst and filter-aid particles from the liquid medium by filtration, and
(c) washing the catalyst and particles.

2. A process for preparing a double metal cyanide complex catalyst for alkylene oxide polymerisation which comprises:
(a) reacting in a liquid medium which includes one or both of (i) an ether generally known to be useful in the reaction of the metal salt and the alkali metal cyanometallate and (ii) a ketone at least one metal salt selected from the salts of Zn(II), Fe(II), Fe(III), Co(II), Ni(II), Mo(IV), Mo(VI), Al(III), V(IV), V(V), Sr(II), W(IV), W(VI), Mn(II), and Cr(III), with at least one alkali metal cyanometallate selected from the metallates of Fe(II), Fe(III), Co(II), Co(III), Cr(III), Mn(II), Mn(III), V(IV), and V(V),
(b) adding from 0.01 to 100 times the total weight of the metal salt plus the alkali metal cyanometallate of filter-aid particles to the liquid medium to form a slurry of double metal cyanide complex catalyst and filter-aid particles dispersed in the liquid medium which has dissolved therein alkali metal salt formed during the reaction;
(c) recovering the double metal cyanide complex catalyst and filter-aid particles from the liquid medium by filtration, and
(d) washing the catalyst and particles.

3. A process as claimed in claim 1 or claim 2 wherein said ether comprises glyme.

4. A process for preparing a double metal cyanide complex catalyst for alkylene oxide polymerization which comprises:
(a) adding an aqueous solution of an alkali metal cyanometallate selected from the group consisting of the metallates of Fe(II), Fe(III), Co(II), Co(III), Cr(III), Mn(II), Mn(III), V(IV), and V(V) to an aqueous slurry of a metal salt selected from the group consisting of the salts of Zn(II), Fe(II), Fe(III), Co(II), Ni(II), Mo(IV), Mo(VI), Al(III), V(IV), V(V), Sr(II), W(IV), W(VI), Mn(II), and Cr(III) and filter-aid particles;
(b) treating the resulting mixture with glyme;
(c) recovering the double metal cyanide complex catalyst and filter-aid particles from the liquid medium by filtration, and
(d) washing the catalyst and particles with aqueous glyme.

5. A process as claimed in Claim 4 but wherein the filter-aid is added to the reaction mixture after step (a) but before step (c).

6. A process as claimed in any one of claims 1 to 5 wherein said filter-aid is selected from alumina, silica gel, diatomaceous earth, silica, aluminum silicate, magnesium silicate, perlite, carbon black and charcoal.

7. A process as claimed in any one of claims 1 to 6 wherein said alkali metal of the alkali metal cyanometallate is selected from sodium and potassium.

8. A process as claimed in any one of claims 1 to 7 wherein said cyanometallate of said alkali metal cyanometallate is selected from hexacyanocobaltate, hexacyanoferrate and hexacyanochromate.

9. A process for the preparation of a propylene oxide polyol by reacting propylene oxide with a polyhydric initiator in the presence of a double metal cyanide complex catalyst characterised in that there is used as catalyst a mixture of double metal cyanide complex catalyst and filter-aid as prepared by the process claimed in any one of claims 1 to 8.

## Patentansprüche

1. Verfahren zur Herstellung eines Doppelmetallcyanidkomplexkatalysators zur Alkylenoxidpolymerisation, bei dem man
(a) in einem flüssigen Medium, das (i) einen Ether, von dem bekannt ist, daß er sich für die Umsetzung des Metallsalzes mit dem Alkalimetallcyanometallat eignet, und/oder (ii) ein Keton enthält, mindestens ein unter Zn(II)-, Fe(II)-, Fe(III)-, Co(II)-, Ni(II)-, Mo(IV)-, Mo(VI)-, Al(III)-, V(IV)-, V(V)-, Sr(II)-, W(IV)-, W(VI)-, Mn(II)- und Cr(III)-Salzen ausgewähltes Metallsalz mit mindestens einem unter den Metallaten von Fe(II), Fe(III), Co(II), Co(III), Cr(III), Mn(II), Mn(III), V(IV) und V(V) ausgewählten Alkalimetallcyanometallat in Anwesenheit des 0.01 bis 100-fachen des Gesamtgewichts von Metallsalz und Alkalimetallcyanometallat an Filtrierhilfeteilchen umsetzt, um eine in einem flüssigen Medium dispergierte Aufschlämmung aus einem Doppelmetallcyanidkomplexkatalysator und Filtrierhilfeteilchen zu bilden, die gelöst ein während der Umsetzung gebildetes Alkalimetallsalz enthält,
(b) mittels Filtration den Doppelmetallcyanidkomplexkatalysator und die Filtrierhilfepartikel aus dem flüssigen Medium zurückgewinnt und
(c) den Katalysator und die Teilchen wäscht.

2. Verfahren zur Herstellung eines Doppelmetallcyanidkomplexkatalysators zur Alkylenoxidpolymerisation, bei dem man
(a) in einem flüssigen Medium, das (i) einen Ether, von dem bekannt ist, daß er sich für die Umsetzung des Metallsalzes mit dem Alkalimetallcyanometallat eignet, und/oder (ii) ein Keton enthält, mindestens ein unter Zn(II)-, Fe(II)-, Fe(III)-, Co(II)-, Ni(II)-, Mo(IV)-, Mo(VI)-, Al(III)-, V(IV)-, V(V)-, Sr(II)-, W(IV)-, W(VI)-, Mn(II)- und Cr(III)-Salzen ausgewähltes Metallsalz mit mindestens einem unter den Metallaten von Fe(II), Fe(III), Co(II), Co(III), Cr(III), Mn(II), Mn(III), V(IV) und V(V) ausgewählten Alkalimetallcyanometallat umsetzt,
(b) das 0,01 bis 100-fache des Gesamtgewichts von Metallsalz und Alkalimetallcyanometallat an Filtrierhilfeteilchen zusetzt, um eine in einem flüssigen Medium dispergierte Aufschlämmung aus einem Doppelmetallcyanidkomplexkatalysator und Filtrierhilfeteilchen zu bilden, die gelöst ein während der Umsetzung gebildetes Alkalimetallsalz enthält,
(c) mittels Filtration den Doppelmetallcyanidkomplexkatalysator und die Filtrierhilfepartikel aus dem flüssigen Medium zurückgewinnt und
(d) den Katalysator und die Teilchen wäscht.

3. Verfahren gemäß Anspruch 1 oder 2, bei dem der Ether Glyme enthält.

4. Verfahren zur Herstellung eines Doppelmetallcyanidkomplexkatalysators zur Alkylenoxidpolymerisation, bei dem man
(a) eine wäßrige Lösung eines aus der aus den Metallaten von Fe(II), Fe(III), Co(II), Co(III), Cr(III), Mn(II), Mn(III), V(IV) und V(V) bestehenden Gruppe ausgewählten Alkalimetallcyanometallats einer wäßrigen Aufschlämmung eines aus der aus Zn(II)-, Fe(II)-, Fe(III)-, Co(II)-, Ni(II)-, Mo(IV)-, Mo(VI)-, Al(III)-, V(IV)-, V(V)-, Sr(II)-, W(IV)-, W(VI)-, Mn(II)- und Cr(III)-Salzen bestehenden Gruppe ausgewählten Metallsalzes und Filtrierhilfeteilchen zusetzt,
(b) die erhaltene Mischung mit Glyme behandelt,
(c) mittels Filtration den Doppelmetallcyanidkomplexkatalysator und die Filtrierhilfepartikel aus dem flüssigen Medium zurückgewinnt und
(d) den Katalysator und die Teilchen mit wäßrigem Glyme wäscht.

5. Verfahren gemäß Anspruch 4, bei dem jedoch die Filtrierhilfe dem Reaktionsgemisch nach Schritt (a), aber vor Schritt (c) zugesetzt wird.

6. Verfahren gemäß einem der Ansprüche 1 bis 5, bei dem die Filtrierhilfe unter Aluminiumoxid, Silikagel, Diatomeenerde, Siliziumoxid, Aluminiumsilikat, Magnesiumsilikat, Perlit, Ruß und Aktivkohle ausgewählt ist.

7. Verfahren gemäß einem der Ansprüche 1 bis 6, bei dem das Alkalimetall des Alkalimetallcyanometallates unter Natrium und Kalium ausgewählt ist.

8. Verfahren gemäß einem der Ansprüche 1 bis 7, bei dem das Cyanometallat des Alkalimetallcyanometallats unter Hexacyanocobaltat, Hexacyanoferrat und Hexacyanochromat ausgewählt ist.

9. Verfahren zur Herstellung eines Propylenoxidpolyols mittels Umsetzung von Propylenoxid mit einem Polyolstarter in Anwesenheit eines Doppelmetallcyanidkomplexkatalysators, dadurch gekennzeichnet, daß als Katalysator eine Mischung aus Doppelmetallcyanidkomplexkatalysator und Filtrierhilfe, hergestellt gemäß einem der Verfahren nach einem der Ansprüche 1 bis 8, verwendet wird.

## Revendications

1. Procédé pour la préparation d'un catalyseur de type complexe de cyanures bimétalliques pour la polymérisation d'oxyde d'alkylène, qui comprend:
(a) la réaction dans un milieu liquide, qui comprend l'un ou les deux composés parmi (i) un éther connu en général comme étant utile dans la réaction du sel métallique et du cyanométallate de métal alcalin et (ii) une cétone, au moins un sel métallique choisi parmi les sels de Zn(II), Fe(II), Fe(III), Co(II), Ni(II), Mo(IV), Mo(VI), Al(III), V(IV), V(V), Sr(II), W(IV), W(VI), Mn(II) et Cr(III), avec au moins un cyanométallate de métal alcalin choisi parmi les métallates de Fe(II), Fe(III), Co(II), Co(III), Cr(III), Mn(II), Mn(III), V(IV) et V(V), en présence de 0,01 à 100 fois le poids total de sel métalliques et de cyanométallate de métal alcalin, de particules d'adjuvant de filtration pour former une bouillie de catalyseur de type complexe de cyanures bimétalliques et de particules d'adjuvant de filtration dispersés dans le milieu liquide dans lequel est dissous le sel de métal alcalin formé pendant la réaction;
(b) la récupération du catalyseur de type complexe de cyanures bimétalliques et des particules d'adjuvant de filtration par filtration du milieu liquide; et
(c) le lavage du catalyseur et des particules.

2. Procédé pour la préparation d'un catalyseur de type complexe de cyanures bimétalliques pour la polymérisation d'oxyde d'alkylène, qui comprend:
(a) la réaction dans un milieu liquide, qui comprend l'un ou les deux composés parmi (i) un éther connu en général comme étant utile dans la réaction du sel métallique et du cyanométallate de métal alcalin et (ii) une cétone, au moins un sel métallique choisi parmi les sels de Zn(II), Fe(II), Fe(III), Co(II), Ni(II), Mo(IV), Mo(VI), Al(III), V(IV), V(V), Sr(II), W(IV), W(VI), Mn(II) et Cr(III), avec au moins un cyanométallate de métal alcalin choisi parmi les métallates de Fe(II), Fe(III), Co(II), Co(III), Cr(III), Mn(II), Mn(III), V(IV) et V(V),
(b) l'addition de 0,01 à 100 fois le poids total du sel métallique plus le cyanométallate de métal alcalin, de particules d'adjuvant de filtration pour former une bouillie de catalyseur de type complexe de cyanures bimétalliques et de particules d'adjuvant de filtration dispersés dans le milieu liquide dans lequel est dissous le sel de métal alcalin formé pendant la réaction;
(c) la récupération du catalyseur de type complexe de cyanures bimétalliques et des particules d'adjuvant de filtration par filtration du milieu liquide; et
(c) le lavage du catalyseur et des particules.

3. Procédé suivant la revendication 1 ou la revendication 2, dans lequel cet éther comprend le glyme.

4. Procédé pour la préparation d'un catalyseur de type complexe de cyanures bimétalliques pour la polymérisation d'oxydé d'alkylène, qui comprend:
(a) l'addition d'une solution aqueuse d'un cyanométallate de métal alcalin choisi parmi les métallates de Fe(II), Fe(III), Co(II), Co(III), Cr(III), Mn(II), Mn(III), V(IV) et V(V), à une bouillie aqueuse d'un sel métallique choisi dans le groupe consistant en sels de Zn(II), Fe(II), Fe(III), Co(II), Ni(II), Mo(IV), Mo(VI), Al(III), V(IV), V(V), Sr(II), W(IV), W(VI), Mn(II) et Cr(III) et de particules d'adjuvant de filtration;
(b) le traitement du mélange résultant avec le glyme;
(c) la récupération du catalyseur de type complexe de cyanures bimétalliques et des particules d'adjuvant de filtration par filtration du milieu liquide; et
(d) le lavage du catalyseur et des particules avec du glyme aqueux.

5. Procédé suivant la revendication 4, mais dans lequel l'adjuvant de filtration est ajouté au mélange réactionnel après l'étape (a) mais avant l'étape (c).

6. Procédé suivant l'une quelconque des revendications 1 à 5, dans lequel cet adjuvant de filtration est choisi parmi une alumine, un gel de silice, une terre d'infusoires, une silice, un silicate d'aluminium, un silicate de magnésium, une perlite, du noir de carbone et du charbon.

7. Procédé suivant l'une quelconque des revendications 1 à 6, dans lequel ce métal alcalin du cyanométallate de métal alcalin est choisi parmi le sodium et le potassium.

8. Procédé suivant l'une quelconque des revendications 1 à 7, dans lequel ce cyanométallate de ce cyanométallate de métal alcalin est choisi parmi l'hexacyanocobaltate, l'hexacyanoferrate et l'hexacyanochromate.

9. Procédé pour la préparation d'un propyloxy polyol par réaction d'oxyde de propylène avec un initiateur polyhydrique en présence d'un catalyseur de type complexe de cyanures bimétalliques, caractérisé en ce que le catalyseur utilisé est un mélange de catalyseur de type complexe de cyanures bimétalliques et d'adjuvant de filtration tel qu'il est préparé par le procédé suivant l'une quelconque des revendications 1 à 8.
